# FASCICULE DE BREVET EUROPEEN

(11) **EP 2 184 240 B1**
(45) Date de publication et mention de la délivrance du brevet: **06.06.2012**
(21) Numéro de dépôt: 09175567.8
(22) Date de dépôt: 10.11.2009
(51) Int. Cl.: B65G 47/51, B65G 17/08

(54) **Dispositif de déplacement sur une bande sans fin à trajet adaptable**
Vorrichtung zum Verschieben auf einem Endlosband mit anpassbarer Bewegungsbahn
Device for moving on an endless belt with adaptable trajectory

(30) Priorité: 10.11.2008 FR 0857629
(43) Date de publication de la demande: 12.05.2010
(73) Titulaire: Fege Sarl, 08400 Vouziers (FR)
(72) Inventeur: Fege, François-Loïc, 08400 Vouziers (FR)
(74) Mandataire: Barbin le Bourhis, Joël

(56) Documents cités:
- EP-A- 1 275 603
- WO-A-01/98187
- FR-A- 2 505 794
- US-A- 6 152 291

## Description

Le présent exposé concerne un dispositif de déplacement permettant de déplacer un ou plusieurs objets selon un trajet variable.

Dans les chaînes de production ou de conditionnement, il est habituel de faire transiter des produits d'un premier poste de travail vers un second poste de travail par l'intermédiaire d'un ou plusieurs convoyeurs intermédiaires. Généralement, ces convoyeurs ont une longueur utile constante, et le trajet des produits qu'ils transportent ne varie pas.

Dans certains cas néanmoins, il est nécessaire d'adapter le trajet du ou des produits en fonction de contraintes particulières de production ou de maintenance.

Par exemple, dans le cas évoqué précédemment, lorsque le second poste de travail est arrêté tandis que le premier poste de travail fonctionne normalement, il est nécessaire de pouvoir stocker temporairement un certain nombre de produits en amont du second poste de travail durant la période où celui-ci est à l'arrêt.

On connaît déjà des dispositifs de déplacement permettant d'augmenter de manière continue le nombre de produits pouvant être transportés à un temps t entre un premier et un second poste de travail, en faisant varier de manière continue la longueur du trajet effectué par les produits. Le document américain US 6,152,291 décrit par exemple un dispositif permettant de dévier les produits depuis un convoyeur d'entrée vers un convoyeur de sortie adjacent et entraîné en sens opposé, dans lequel la distance parcourue par le produit sur le convoyeur d'entrée et le convoyeur de sortie peut être adaptée selon les besoins. Pour atteindre cet objectif, le dispositif comprend une roue, disposée dans un espace libre situé entre les deux convoyeurs, et un guide affleurant à la surface des deux convoyeurs, destiné à dévier l'ensemble des produits du convoyeur d'entrée vers la roue et de la roue vers le convoyeur de sortie. La roue et le guide sont agencés de manière à pouvoir être déplacés dans la direction longitudinale desdits convoyeurs, ce par quoi la longueur utile des convoyeurs, c'est-à-dire celle sur laquelle les produits peuvent être transportés, peut varier. En augmentant la longueur totale de bande sur laquelle les produits peuvent être déposés, on augmente le nombre de produits pouvant être transportés à un instant t entre le convoyeur d'entrée et le convoyeur de sortie.

Le dispositif décrit dans le document US 6,152,291 permet de faire varier le trajet des produits mais nécessite la mise en oeuvre d'au moins deux convoyeurs, une roue intermédiaire et un guide permettant de dévier les produits du premier au second convoyeur. L'inconvénient d'un tel dispositif réside dans la nécessité de faire transiter les produits entre plusieurs voies de transport, ce qui augmente les risques de détérioration des produits et, surtout, impose de ralentir les cadences.

Un autre dispositif de déplacement, tel que défini dans le préambule de la revendication 1, est décrit dans le document WO 01/98187.

Le but de la présente invention est donc de proposer un dispositif de déplacement d'objets permettant de faire varier le trajet des dits objets sans les faire transiter entre plusieurs voies de transport.

Cet objectif est atteint au moyen d'un dispositif de déplacement selon l'invention comprenant un convoyeur constitué d'une bande sans fin, comportant une partie utile définie dans un plan de travail sensiblement horizontal, et une partie de réserve définie dans un plan de réserve confondu ou non avec ledit plan de travail, une première roue de guidage mobile linéairement dans ledit plan de travail et guidant la bande sans fin, une première roue de guidage mobile linéairement dans ledit plan de réserve et guidant la bande sans fin, deux organes de renvoi pour renvoyer la bande sans fin du plan de travail vers le plan de réserve, un moyen d'entraînement de la bande sans fin, et un moyen de déplacement pour déplacer en synchronisme les deux premières roues de guidage de telle manière que la somme des distances entre chaque première roue de guidage et les organes de renvoi soit constante, ce par quoi la longueur de la partie utile de la bande sans fin est susceptible de varier en continu et la quantité d'objets pouvant être déposés sur la partie utile de la bande peut varier en conséquence, et caractérisé en ce qu'il comprend en outre au moins une seconde roue de guidage mobile linéairement dans ledit plan de travail, au moins un organe de déviation fixe dans ledit plan de travail, pour renvoyer la bande sans fin de la première roue de guidage mobile à la seconde roue de guidage mobile dans ledit plan de travail, au moins une seconde roue de guidage mobile linéairement dans ledit plan de réserve, au moins un organe de déviation fixe dans ledit plan de réserve, pour renvoyer la bande sans fin de la première roue de guidage mobile à la seconde roue de guidage mobile dans ledit plan de réserve, et au moins un second moyen de déplacement pour les secondes roues de guidage, destiné à déplacer en synchronisme les dites secondes roues de guidage de telle manière que la somme des distances entre chaque roue de guidage et les organes de renvoi soit constante.

Avantageusement, le plan de travail et le plan de réserve sont parallèles.

Selon un exemple de réalisation de l'invention, les deux organes de renvoi sont des poulies entraînées par un moteur, qui constituent ledit moyen d'entraînement de la bande sans fin.

Selon un autre exemple de réalisation de l'invention, les roues de guidage mobiles linéairement sont entraînées en rotation par un moteur, et constituent ledit moyen d'entraînement de la bande sans fin.

Le moyen de déplacement ou chaque moyen de déplacement peut être une courroie de guidage sur laquelle est fixé un couple de roues de guidage, de sorte que, lorsque la courroie se déplace, elle entraîne les deux roues de guidage, faisant ainsi varier la longueur de la portion utile de la bande sans fin.

Avantageusement, deux roues de guidage associées se déplacent linéairement dans un même plan de guidage.

Avantageusement, deux roues de guidage associées se déplacent linéairement dans des directions parallèles et opposées.

Le plan de guidage ou chaque plan de guidage dans lequel se déplace un couple de roues de guidage est de préférence perpendiculaire au plan de travail.

Le dispositif de déplacement selon la présente invention peut par exemple être utilisé pour le stockage temporaire de produits entre un premier poste de travail et un second poste de travail.

D'autres caractéristiques et avantages de différents mode de réalisation d'un dispositif de déplacemnt selon le present exposé ressortiront à la lecture de la description suivante faite à titre d'exemple non limitatif et en référence aux dessins annexés dans lesquels :
- La figure 1 est un vue en perspective d'un dispositif de déplacement selon un premier mode de mise en oeuvre,
- Les figures 2A et 2B illustrent un exemple de module pouvant être utilisé pour la constitution de la bande sans fin,
- Les figures 3 et 4 illustrent le dispositif de déplacement de la figure 1 dans son mode traversant,
- Les figures 5 à 8 illustrent différentes étapes de la phase d'accumulation du dispositif de déplacement,
- Les figures 9 à 11 illustrent différentes étapes de la phase de vidange du dispositif de déplacement,
- Les figures 12A et 12B illustrent un dispositif de déplacement selon un second mode de réalisation de l'invention.

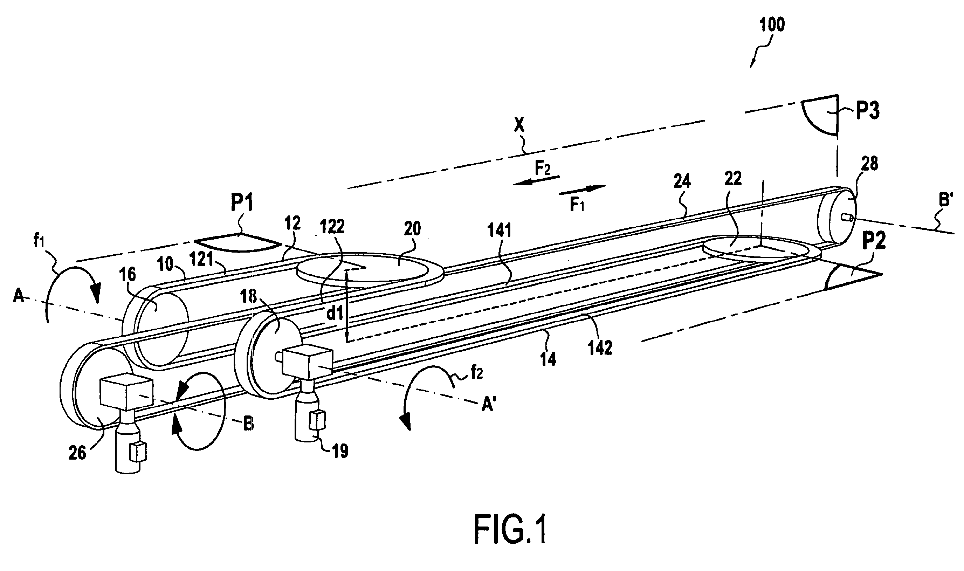

La figure 1 illustre un dispositif de déplacement selon un premier mode de mise en oeuvre selon le présent exposé. Ce premier mode de mise en cause ne fait pas partie l'invention revendiquée.

Le dispositif de déplacement 100 comprend une bande sans fin 10 constituée d'une partie utile 12, destinée à transporter des objets et d'une partie de réserve 14 constituant une réserve de longueur de bande.

La partie utile 12 de la bande sans fin 10 est définie dans un plan de travail horizontal P1. Dans l'exemple illustré sur la figure 1, la partie de réserve 14 est définie dans un plan de réserve P2 parallèle au plan de travail P1 et espacé de ce dernier d'une distance d1. Le plan de réserve P2 est situé en dessous du plan de travail P1. De cette manière, l'installation peut conserver une certaine compacité et la partie de réserve 14 peut être cachée par un carter extérieur de machine ou un plancher. Selon un autre exemple de réalisation de l'invention, le plan de réserve P2 peut être confondu avec le plan de travail P1. Selon encore un autre exemple de réalisation, le plan de réserve P2 et le plan de travail P1 peuvent être sécants.

La bande sans fin 10 est renvoyée depuis le plan de travail P1 vers le plan de réserve P2 par l'intermédiaire de poulies de renvoi 16, 18.

La première poulie de renvoi 16 est entraînée en rotation autour d'un axe A, dans une direction f1. Elle renvoie la bande sans fin 10 du plan de réserve P2 vers le plan de travail P1.

La seconde poulie de renvoi 18 est entraînée autour d'un axe A' qui est ici confondu avec l'axe A, dans une direction f2, opposée à la direction f1. Elle renvoie la bande sans fin 10 du plan de travail P1 vers le plan de réserve P2.

Dans l'exemple illustré sur la figure 1, les poulies de renvoi 16, 18 ont toutes deux un diamètre égal à la distance d1 séparant le plan de travail P1 du plan de réserve P2. La bande sans fin 10 forme donc un U renversé dont la branche supérieure constitue la partie utile 12 et la branche inférieure constitue la partie de réserve 14.

Il est clair que les axes de rotation A, A' des deux poulies de renvoi 16, 18 pourraient également être parallèles ou sécants, selon d'autres exemples de réalisation de l'invention.

La partie utile 12 de la bande sans fin 10 est constituée d'un premier brin rectiligne 121 et d'un second brin rectiligne 122 parallèle au premier, définis dans la direction d'un axe X représenté sur la figure 1, et s'étendant respectivement depuis l'une des poulies 16, 18 jusqu'à une première zone de repli de la bande 10. Au niveau de cette zone de repli, la bande sans fin 10 est guidée autour d'une roue de guidage 20 située dans le plan de travail P1. Sur la figure 1, le premier brin rectiligne 121 de la partie utile 12, situé en aval de la première poulie 16, se déplace dans la direction de l'axe X selon un sens F1. Le second brin rectiligne de la partie utile se déplace dans la direction de l'axe X selon un sens F2 opposé à F1.

De la même manière, comme illustré sur la figure 1, la partie de réserve 14 de la bande sans fin 10 est constituée d'un premier brin rectiligne 141 et d'un second brin rectiligne 142 tous deux définis dans la direction de l'axe X et s'étendant respectivement depuis l'une des poulies 16, 18 jusqu'à une seconde zone de repli de la bande 10. Le premier brin rectiligne 141 de la partie de réserve 14, situé en amont de la première poulie 16, se déplace dans la direction de l'axe X selon le sens F2. Le second brin rectiligne 142 de la partie de réserve 14 se déplace dans la direction de l'axe X selon le sens F1 opposé à F2.

Les deux poulies 16, 18 sont entraînées par un moteur 19 et entraînent le déplacement de la bande sans fin 10 autour des roues de guidage 20, 22. Selon un autre mode de réalisation, les poulies de renvoi 16, 18 sont passives et les roues de guidage 20, 22 entraînent la bande sans fin 10.

Dans le mode de réalisation illustré sur la figure 1, les brins rectilignes 121, 122 formant la partie utile et ceux 141, 142 formant la partie de réserve sont tous dirigés dans la direction de l'axe X. Selon d'autres modes de réalisation, ces brins pourront être dirigés dans des directions différentes.

La longueur L de la partie utile 12 de la bande sans fin 10 est variable. De cette manière, le trajet parcouru par des produits déposés sur la bande sans fin est variable, de même que le nombre total de produits pouvant être transportés sur la bande sans fin à un instant t. Cet objectif est atteint avec les roues de guidage 20, 22, grâce au fait que celles-ci sont mobiles en translation, de manière synchrone, dans la direction de l'axe X, de telle manière que la somme des distances entre chaque roue de guidage et les poulies de renvoi soit constante.

Pour cela, les deux roues de guidage 20, 22 ont leurs axes de rotation qui sont montés sur une courroie appelée courroie de guidage 24. Cette courroie de guidage 24 est définie dans un plan de guidage P3 qui correspond ici au plan de symétrie S du dispositif de déplacement 100, perpendiculaire au plan de travail P1 et parallèle à la direction de l'axe X. Elle est entraînée par deux poulies de guidage 26, 28, de diamètre d1 égal à la distance séparant le plan de travail P1 et le plan de réserve P2. Les axes de rotation respectifs B, B' des deux poulies de guidage 26, 28 sont parallèles entre eux et perpendiculaires au plan de symétrie S du dispositif de déplacement 100. L'une des poulies de guidage 26 est située à proximité des poulies de renvoi 16, 18, de sorte que la roue de guidage 20 située dans le plan de travail P1 peut être ramenée quasiment entre les deux poulies de renvoi 16, 18. Dans cette position extrême, la longueur L de la partie utile de la bande sans fin 10 est minimale. La seconde poulie de guidage 28 est située à une distance suffisante des poulies de renvoi 16, 18 pour que l'amplitude de déplacement des roues de guidage 20, 22 soit suffisante, de même que l'amplitude de variation de longueur ΔL de la partie utile 12 de la bande sans fin 10.

D'autres moyens de déplacement peuvent être utilisés, selon d'autres exemples de réalisation, pour déplacer de manière synchrone les roues de guidage 20, 22.

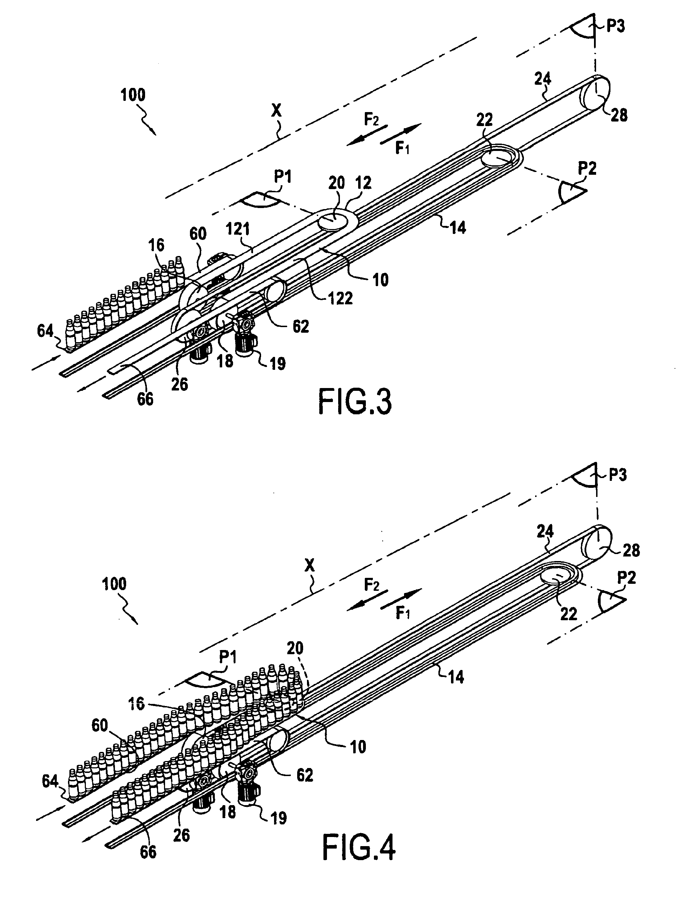

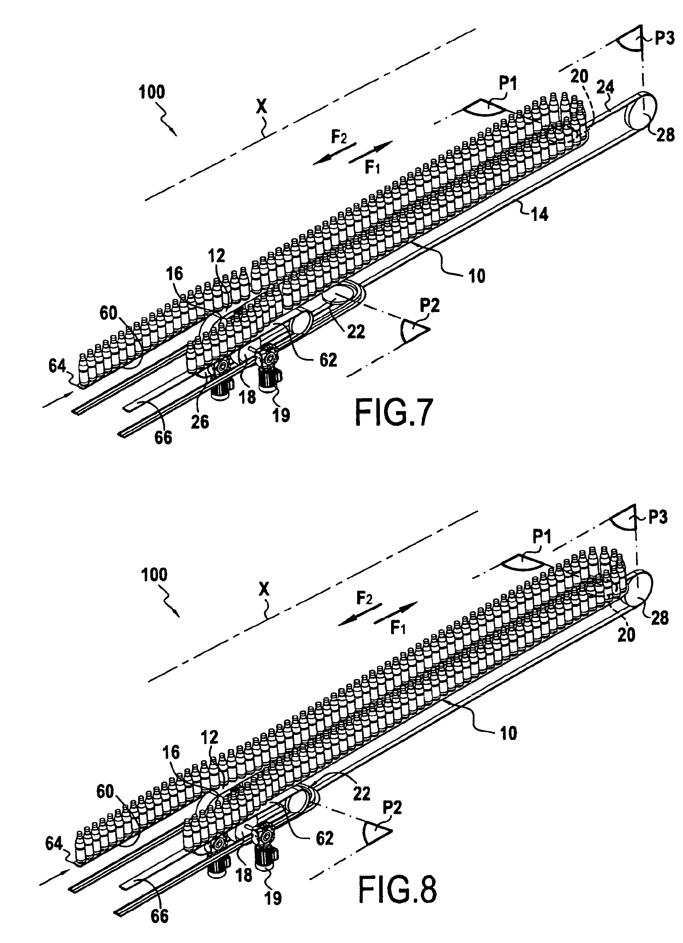

Le fonctionnement du dispositif de déplacement 100 sera décrit plus en détail dans la suite de la description en référence aux figures 3 à 11.

La largeur de la bande sans fin 10 peut être adaptée à la nature et au volume des objets transportés. Les objets peuvent transiter sur la bande sans fin indifféremment en file unique (single file) ou en flux de masse (mass flow). Par exemple, les produits pouvant être difficilement accumulés tels que les paquets fragiles, les barres chocolatées, les bouteilles de formes particulières, et les produits nécessitant de conserver une orientation constante (« facing ») seront le plus souvent transportés en file unique. A l'inverse, les produits supportant une forte pression et faciles à recanaliser sur une seule voie grâce à un aligneur transiteront généralement en flux de masse.

La bande sans fin 10 peut être constituée d'une pluralité de modules reliés les uns aux autres pour former une bande au contour fermé. De manière générale, le module devra présenter deux degrés de liberté, l'un en rotation autour d'un axe perpendiculaire à la surface de transport de la bande sans fin et le second en rotation autour d'un axe perpendiculaire à la direction d'avancement de la bande sans fin et parallèle à la surface de transport de ladite bande. De cette manière, la bande sans fin peut se déformer, d'une part, lors de son passage autour des roues de guidage 20, 22 dans le plan de travail P1 et le plan de réserve P2, et d'autre part, lors de son passage autour des poulies de renvoi 16, 18, entre ces deux plans.

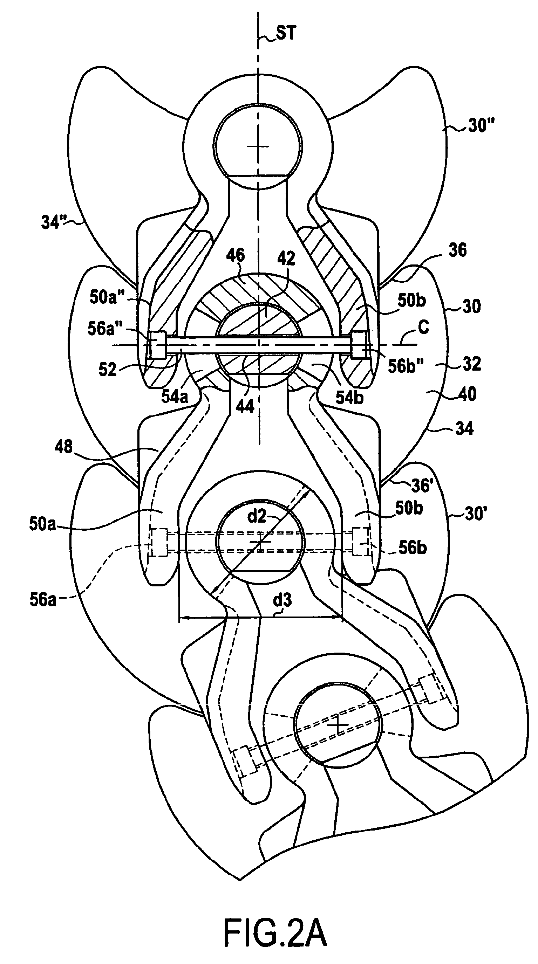

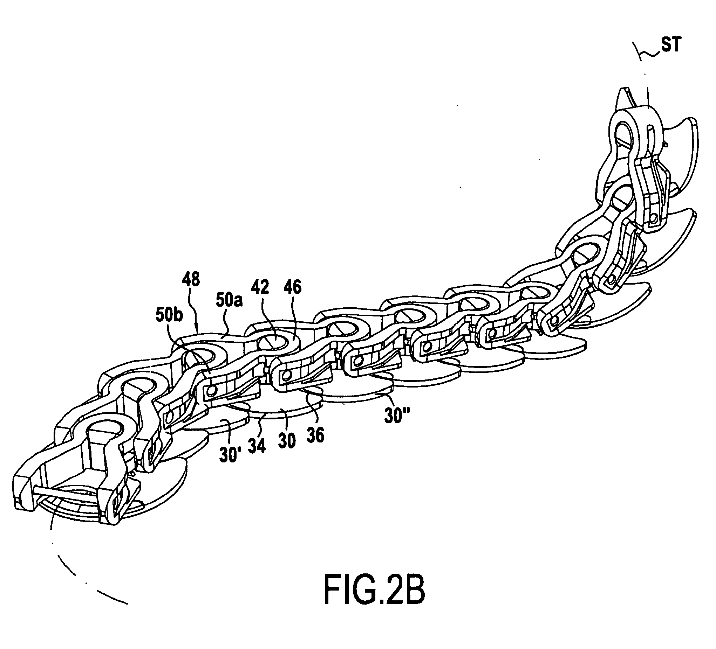

Un exemple de module pouvant être utilisé pour la constitution d'une telle bande sans fin est illustré sur la figure 2A. Le module 30 comprend une plaque 32 en forme de quart de lune, dont le côté convexe 34 est destiné à coopérer avec le côté concave 36' d'un module adjacent 30' et dont le côté concave 36 est destiné à coopérer avec le côté convexe 34" d'un module adjacent 30". Le module 30 présente une face de transport supérieure (non représentée) et une face inférieure 40 où sont agencés les éléments permettant la liaison du module 30 avec les modules adjacents 30', 30". Le module comporte un axe 42, perpendiculaire à la surface de transport, faisant saillie sur la face inférieure 40 du module 30. Sur sa partie distale, l'axe 42 présente un trou débouchant 44, d'axe C perpendiculaire au plan de symétrie ST du module 30. L'axe 42 est entouré sur la quasi-totalité de sa périphérie par une partie de tête 46 d'un étrier 48. La partie de tête 46 de l'étrier 48 est prolongée par deux bras d'étrier 50a et 50b situés en regard l'un de l'autre et espacés, à leur extrémité, d'une distance d3 supérieure au diamètre extérieur d2 de la tête d'étrier 46. Un axe 52 est monté dans le trou traversant 44. Cet axe 52 traverse des fentes oblongues 54a, 54b prévues de part et d'autre de la tête d'étrier 46 et vient se fixer dans des trous 56a", 56b" formés dans l'extrémité de chaque bras d'étrier 50a", 50b" d'un module adjacent 30". Les fentes 54a, 54b prévues dans la tête d'étrier 46 permettent la rotation de l'étrier 48 autour de l'axe 42. De ce fait, la bande sans fin 10 est assurée de pouvoir pivoter autour des roues de guidage 20, 22. Par ailleurs, l'axe 52 constitue un pivot permettant à la bande sans fin d'être renvoyée du plan de travail vers la plan de réserve par l'intermédiaire des poulies de renvoi 16, 18. La figure 2B illustre une portion de la bande sans fin constituée des modules décrits ci-dessus.

Un exemple d'utilisation du dispositif de déplacement selon le présent exposé pour le stockage temporaire de produits entre un convoyeur d'alimentation et un convoyeur de sortie va être décrit dans la suite en référence aux figures 3 à 11.

Comme illustré sur la figure 3, le dispositif de déplacement 100 est placé entre un convoyeur d'alimentation 60 et un convoyeur de sortie 62. Le convoyeur d'alimentation 60 et le convoyeur de sortie 62 se déplacent dans la direction de l'axe X, selon des sens opposés F1, F2. Le convoyeur d'alimentation 60 est adjacent au premier brin 121 de la partie utile 12 de la bande sans fin 10 et sa surface de transport 64 est située dans le même plan de travail P1 que la partie utile 12. De la même manière, le convoyeur de sortie 62 est adjacent au deuxième brin 122 de la partie utile 12 de la bande sans fin 10 et sa surface de transport 66 est située dans le même plan de travail P1.

Grâce à un guide (non représenté) surplombant la surface de transport 64 du convoyeur d'alimentation 60, les produits peuvent être facilement déviés depuis le convoyeur d'alimentation 60 jusqu'au premier brin 121 de la partie utile 12 au niveau d'une station d'entrée des produits. De la même manière, grâce à un guide (non représenté) surplombant la surface de transport 66 du convoyeur de sortie 62, les produits peuvent être facilement déviés depuis le second brin 122 de la partie utile 12 vers le convoyeur de sortie 62 au niveau d'une station de sortie des produits.

Des produits peuvent transiter d'une première machine M1 (non représentée) vers une seconde machine M2 (non représentée) via le premier convoyeur 60, le dispositif de déplacement 100 puis le second convoyeur 62. Dans un cas où la seconde machine M2 est arrêtée momentanément, le convoyeur de sortie 62 est arrêté pour stopper l'acheminement des produits vers la machine M2, tandis que la machine M1 continue de libérer des produits à sa cadence habituelle. Le dispositif de déplacement 100 selon l'invention permet d'augmenter la longueur L de la partie utile 12 de la bande sans fin 10 de manière continue, faisant ainsi s'accroître simultanément le nombre de produits N pouvant être déposés sur la bande à un instant t. L'augmentation de la capacité de support de la bande sans fin 10 peut être assimilée à une accumulation ou à un stockage temporaire des produits entre leur station d'entrée et leur station de sortie.

Sur les figures 3 et 4, le dispositif de déplacement 100 est représenté dans un mode de fonctionnement dit « traversant », dans lequel les roues de guidage 20, 22 sont fixes et la longueur L de la partie utile 12 de la bande sans fin 10 reste constante. Les produits transitent directement du convoyeur d'alimentation 60 au convoyeur de sortie 62 via la partie utile 12 de la bande sans fin 10 de longueur constante minimale L1.

Lorsque le convoyeur de sortie 62 est arrêté, la phase d'accumulation démarre. La courroie de guidage 24 est entraînée de manière continue autour des poulies de guidage 26, 28 de sorte que la roue de guidage 20 située dans le plan de travail P1 est déplacée selon la direction de l'axe X dans le sens F1. De cette manière, la longueur L de la partie utile 12 de la bande sans fin 10 s'accroit progressivement et le nombre N de produits pouvant être accumulés à un instant t entre les convoyeurs d'alimentation 60 et de sortie 62 augmente simultanément.

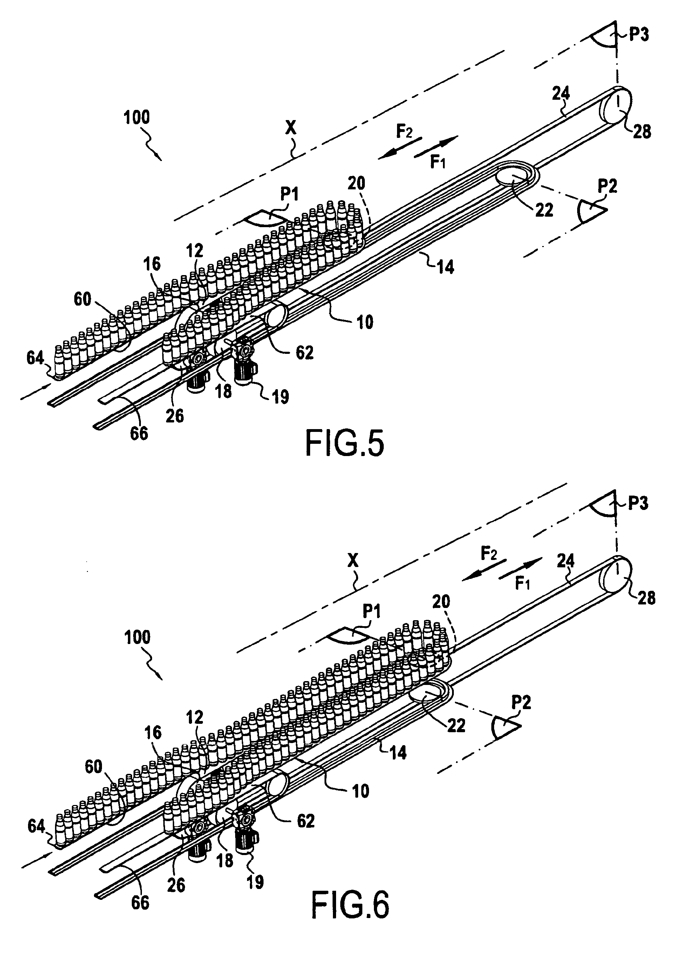

Les figures 5 à 8 illustrent différentes étapes de la phase d'accumulation. La partie utile 12 de la bande sans fin 10 atteint sa capacité d'accumulation maximale lorsque la roue de guidage 20 située dans le plan de travail P1 atteint sa position extrême la plus éloignée de la station d'entrée des produits sur la bande sans fin 10.

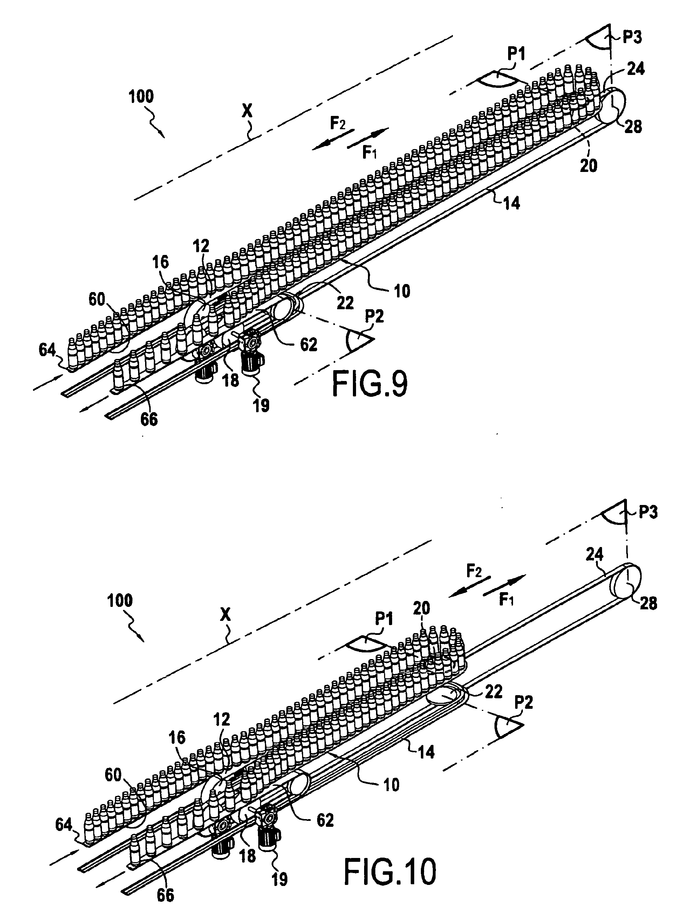

Les figures 9 à 11 illustrent différentes étapes de la phase de vidange de la bande sans fin.

La figure 9 illustre le début de la phase dite de « vidange » du dispositif de déplacement, qui intervient une fois que le convoyeur de sortie 62 s'est remis à fonctionner. Au fur et à mesure de la vidange, la roue de guidage 20 située dans le plan de travail P1 est progressivement ramenée jusque dans sa position initiale, qui correspond à sa position extrême la plus proche de la station d'entrée des produits sur la bande sans fin 10, et la longueur L de la partie utile 12 de la bande sans fin 10 revient à sa valeur la plus faible L1.

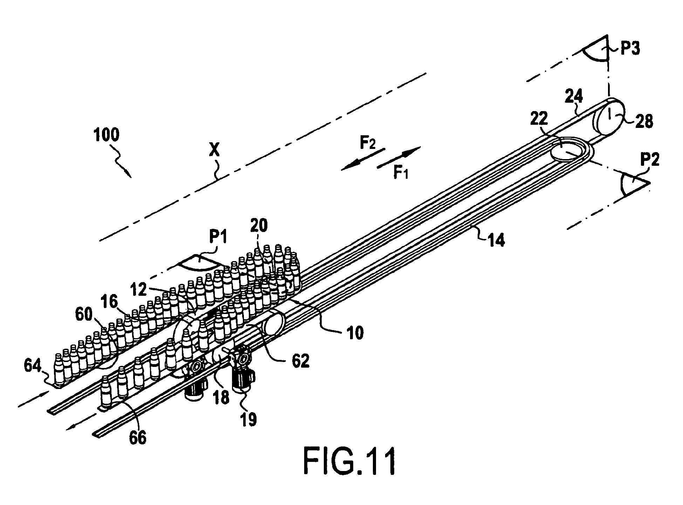

La figure 11 représente la fin de la phase de vidange, à un moment où le dispositif de déplacement fonctionne de nouveau en mode traversant.

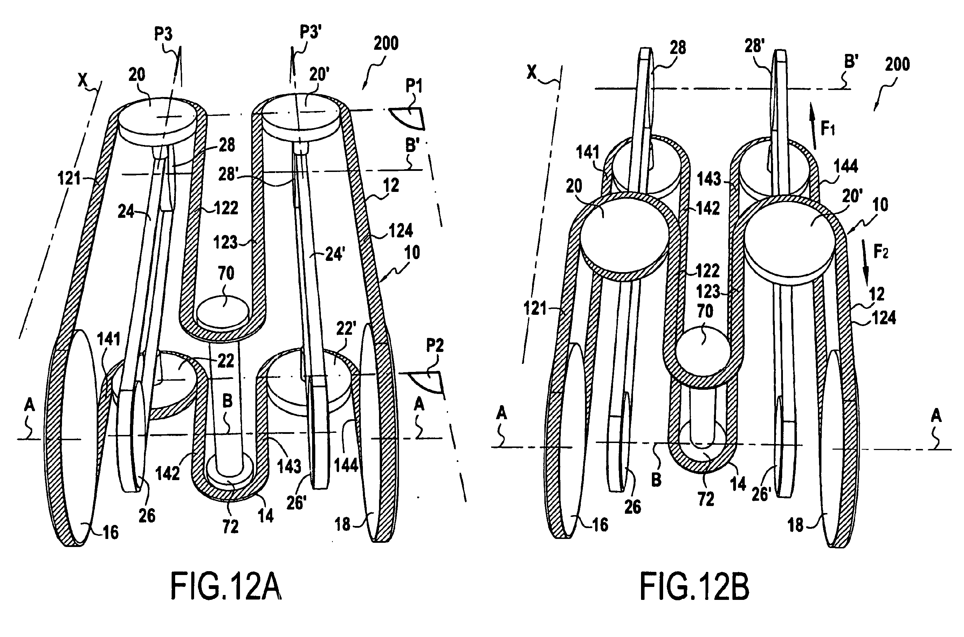

Un second mode de réalisation de l'invention va être décrit dans la suite en référence aux figures 12A et 12B.

En conservant un principe de fonctionnement similaire à celui du mode de réalisation précédent, le second mode de réalisation vise à accroître l'amplitude de variation de la longueur L de la partie utile de la bande sans fin, et à augmenter ainsi le nombre de produits pouvant être transportés par la bande 10 à un instant t, tout en maintenant une certaine compacité du dispositif.

Pour atteindre cet objectif, le dispositif de déplacement décrit précédemment a été démultiplié.

Comme dans le premier mode de réalisation, le dispositif de déplacement 200 comprend une bande sans fin 10 composée d'une partie utile 12 définie dans un plan de travail P1 et d'une partie de réserve 14 définie dans un plan de réserve P2 parallèle au plan de travail P1.

La bande sans fin 10 est renvoyée depuis le plan de travail P1 vers le plan de réserve P2 au moyen de poulies de renvoi 16, 18.

Dans le plan de travail et le plan de réserve, la bande n'est plus constituée uniquement de deux brins rectilignes s'étendant de part et d'autre d'une zone de repli, comme dans le premier mode de réalisation. La bande est ondulée et suit, dans le plan de travail tout comme dans le plan de réserve, une ligne formée par une succession de courbes alternativement concaves et convexes, permettant ainsi de rallonger la longueur totale de la bande tout en maintenant une certaine compacité du dispositif de déplacement dans son ensemble.

Dans le plan de travail P1, la bande comporte un premier brin rectiligne 121 reliant la première poulie de renvoi 16 à une première roue de guidage 20, un second brin rectiligne 122 reliant la première roue de guidage 20 à une roue de déviation fixe 70, un troisième brin rectiligne 123 reliant la roue de déviation fixe 70 à une seconde roue de guidage 20' et un quatrième brin rectiligne 124 reliant la seconde roue de guidage 20' à la seconde poulie de renvoi 18. Les quatre brins rectilignes 121 à 124 s'étendent tous dans la direction de l'axe X.

De manière quasi symétrique, dans le plan de réserve P2, la bande 10 comporte un premier brin rectiligne 141 reliant la première poulie de renvoi 16 à une première roue de guidage 22, un second brin rectiligne 142 reliant la première roue de guidage 22 à une roue de déviation fixe 72, un troisième brin rectiligne 143 reliant la roue de déviation fixe 72 et une seconde roue de guidage 22' et un quatrième brin rectiligne 144 reliant la seconde roue de guidage 22' à la seconde poulie de renvoi 18. Les quatre brins rectilignes 141 à 144 s'étendent également tous dans la direction de l'axe X.

Les roues de déviation fixes 70, 72 remplissent ici une fonction sensiblement identique à celle des poulies de renvoi.

On désignera comme roues de guidage associées, deux roues de guidage situées dans un même plan de guidage perpendiculaire au plan de travail et parallèle à la direction de l'axe X. Deux roues de guidage associées sont fixées à une courroie de guidage destinée à les déplacer en synchronisme de manière que la somme des distances entre chaque roue de guidage et les poulies de renvoi soit constante.

Les roues de guidage associées 20, 22 sont fixées à une courroie de guidage 24 définie dans un plan de guidage P3 et les roues de guidage associées 20', 22' sont fixées à une seconde courroie de guidage 24' définie dans un plan de guidage P3'.

La figure 12A représente le dispositif dans un état dans lequel la longueur L de la partie utile 12 de la bande sans fin 10 est maximale. Les deux roues de guidage 20, 20' sont toutes deux dans leur position extrême la plus éloignée des poulies de renvoi 16, 18.

La figure 12B représente le dispositif dans un état dans lequel la longueur L de la partie utile 12 de la bande sans fin 10 est minimale.

Sur les figures, on a représenté un cas où les courroies de guidage 24 et 24' se déplacent en synchronisme. Il est évident que les courroies de guidage peuvent également être déplacées indépendamment l'une de l'autre, de manière à régler la longueur du premier et du deuxième brin d'une part et celle du troisième et du quatrième brin d'autre part, à des valeurs différentes.

Par ailleurs, on comprend aisément que le dispositif peut être dupliqué autant de fois que nécessaire, afin d'obtenir une longueur de bande appropriée aux besoins de la production. Ainsi, plus généralement, le dispositif de déplacement selon invention peut comprendre 2N brins rectilignes, N roues de guidage 20 et (N-1) roues de déviation 70 dans le plan de travail P1, 2N brins rectilignes, N roues de guidage 22 et (N-1) roues de déviation 72 dans le plan de réserve et 2 poulies de renvoi 16, 18 de la bande sans fin du plan de travail vers le plan de réserve.

## Revendications

1. Dispositif de déplacement comprenant
une bande sans fin (10), comportant une partie utile (12) définie dans un plan de travail (P1) sensiblement horizontal et une partie de réserve (14) définie dans un plan de réserve (P2) confondu ou non avec ledit plan de travail (P1),
une première roue de guidage (20) mobile linéairement dans ledit plan de travail (P1) et guidant la bande sans fin (10),
une première roue de guidage (22) mobile linéairement dans ledit plan de réserve (P2) et guidant la bande sans fin (10),
deux organes de renvoi pour renvoyer la bande sans fin (10) du plan de travail (P1) vers le plan de réserve (P2),
un moyen d'entraînement de la bande sans fin, et
un moyen de déplacement pour déplacer en synchronisme les deux premières roues de guidage (20, 22) de telle manière que la somme des distances entre chaque première troue de guidage (20, 22) et les organes de renvoi soit constante, ce par quoi la longueur (L) de la partie utile (12) de la bande sans fin (10) est susceptible de varier en continu et la quantité d'objets pouvant être déposés sur la partie utile (12) de la bande (10) peut varier en conséquence,
**caractérisé en ce qu'**il comprend en outre
au moins une seconde roue de guidage (20') mobile linéairement dans ledit plan de travail (P1),
au moins un organe de déviation (70) fixe dans ledit plan de travail (P1), pour renvoyer la bande sans fin (10) de la première roue de guidage mobile (20) à la seconde roue de guidage mobile (20') dans ledit plan de travail,
au moins une seconde roue de guidage (22') mobile linéairement dans ledit plan de réserve (P2),
au moins un organe de déviation (72) fixe dans ledit plan de réserve (P2), pour renvoyer la bande sans fin (10) de la première roue de guidage mobile (22) à la seconde roue de guidage mobile (22') dans ledit plan de réserve
et au moins un second moyen de déplacement pour les secondes roues de guidage (20', 22'), destiné à déplacer en synchronisme les dites secondes roues de guidage (20', 22') de telle manière que la somme des distances entre chaque roue de guidage et les organes de renvoi soit constante.

2. Dispositif de déplacement selon la revendication 1, **caractérisé en ce que** le plan de travail (P1) et le plan de réserve (P2) sont parallèles.

3. Dispositif de déplacement selon la revendication 1 ou 2, **caractérisé en ce que** les deux organes de renvoi sont des poulies (16, 18) entraînées par un moteur (19), qui constituent ledit moyen d'entraînement de la bande sans fin (10).

4. Dispositif de déplacement selon la revendication 1 ou 2, **caractérisé en ce que** les roues de guidage (20, 22) mobiles linéairement sont entraînées en rotation par un moteur, et constituent ledit moyen d'entraînement de la bande sans fin.

5. Dispositif de déplacement selon l'une quelconque des revendications 1 à 4, **caractérisé en ce que** chaque moyen de déplacement est une courroie de guidage (24, 24') sur laquelle est fixé un couple de roues de guidage (20, 22 ; 20', 22'), de sorte que, lorsque la courroie (24, 24') se déplace, elle entraîne les deux roues de guidage (20, 22 ; 20', 22'), faisant ainsi varier la longueur (L) de la portion utile (12) de la bande sans fin (10).

6. Dispositif de déplacement selon l'une quelconque des revendications 1 à 5, **caractérisé en ce que** deux roues de guidage associées (20, 22 ; 20', 22') se déplacent linéairement dans un même plan de guidage (P3, P3').

7. Dispositif de déplacement selon l'une quelconque des revendications 1 à 6, **caractérisé en ce que** deux roues de guidage (20, 22 ; 20', 22') associées se déplacent linéairement dans des directions parallèles et selon des sens opposés.

8. Dispositif de déplacement selon la revendication 6 ou 7, **caractérisé en ce que** chaque plan de guidage (P3, P3') dans lequel se déplace un couple de roues de guidage (20, 22 ; 20', 22') est perpendiculaire au plan de travail (P1).

9. Dispositif de déplacement selon l'une quelconque des revendications 1 à 8, **caractérisé en ce qu'**il est utilisé pour le stockage temporaire de produits entre un premier poste de travail et un second poste de travail.

## Claims

1. A deflector device, comprising:
an endless belt (10) comprising a working portion (12)defined in a substantially horizontal working plane (P1)and a reserve portion (14) defined in a reserve plane (P2) optionally coinciding with said working plane (P1);
a first guide wheel (20) linearly movable in said working plane (P1) and guiding the endless belt (10);
a first guide wheel (22) linearly movable in said reserve plane (P2) and guiding the endless belt (10);
two deflector members for deflecting the endless belt (10) from the working plane (P1) to the reserve plane (P2);
drive means for driving the endless belt; and
movement means for synchronously moving the two first guide wheels (20,22) in such a manner that the sum of the distances between each of the first guide wheels (20,22) and the deflector members is constant;
whereby the length (L) of the working portion (12) of the endless belt (10) is capable of varying continuously and the quantity of articles that can be placed on the working portion (12) of the belt (10) can vary accordingly, **characterized in that** it further comprises:
at least one second guide wheel (20) linearly movable in said working plane (P1);
at least one stationary deviation member (70) in said working plane (P1) to deflect the endless belt (10) from the first movable guide wheel (20) to the second movable guide wheel (20') in said working plane;
at least one second guide wheel (22') linearly movable in said reserve plane (P2);
at least one stationary deviation member (72) in said reserve plane (P2) for deflecting the endless belt (10) from the first movable guide wheel (22) to the second movable guide wheel (22') in said reserve plane; and
at least one second movement means for the second guide wheels (20,20') for moving said second guide wheels (20', 22') synchronously in such a manner that the sum of the distances between each guide wheel and the deflector members remain constant.

2. A movement device according to claim 1, **characterized in that** the working plane (P1) and the reserve plane (P2) are parallel.

3. A movement device according to claim 1 or 2, **characterized in that** the two deflector members are pulleys (16,18) driven by a motor (19), said pulleys constituting said drive means for driving the endless belt (10).

4. A movement device according to claim 1 or 2, **characterized in that** the linearly movable guide wheels (20,22) are driven in rotation by a motor, and constitute said drive means for driving the endless belt.

5. A movement device according to any one of claims 1 to 4, **characterized in that** each movement means is a guide belt (24,24') having a pair of guide wheels (20,22;20',22') fastened thereto in such a manner that when the belt (24,24') moves, it moves the two guide wheels (20,22;20',22'), thereby causing the length (L) of the working portion (12) of the endless belt (10) to vary.

6. A movement device according to any one of claims 1 to 5, **characterized in that** two associated guide wheels (20,22;20',22') move linearly in a common guide plane (P3,P3').

7. A movement device according to any one of claims 1 to 6, **characterized in that** two associated guide wheels (20,22;20',22') move linearly in opposite directions in parallel.

8. A movement device according to claim 6 or 7, **characterized in that** each guide plane (P3,P3') in which a pair of guide wheels (20,22;20',22') moves is perpendicular to the working plane (P1).

9. A movement device according to any one of claims 1 to 8, **characterized in that** it is used for temporary storage of articles between a first working station and a second working station.

## Patentansprüche

1. Bewegungsvorrichtung umfassend
ein Endlosband (10), das einen Nutzteil (12), der in einer im wesentlichen horizontalen Arbeitsebene (P1) definiert ist, sowie einen Reserveteil (14), der in einer Reserveebene (P2) definiert ist, die mit der Arbeitsebene (P1) zusammenfällt oder nicht, umfaßt,
ein erstes Leitrad (20), das in der Arbeitsebene (P1) linear beweglich ist und das Endlosband (10) führt,
ein erstes Leitrad (22), das in der Reserveebene (P2) linear beweglich ist und das Endlosband (10) führt,
zwei Umlenkorgane zum Umlenken des Endlosbandes (10) von der Arbeitsebene (P1) zur Reserveebene (P2),
ein Mittel zum Antreiben des Endlosbandes und
ein Bewegungsmittel, um die beiden ersten Leiträder (20, 22) derart synchron zu bewegen, daß die Summe der Abstände zwischen jedem ersten Leitrad (20, 22) und den Umlenkorganen konstant ist, wodurch die Länge (L) des Nutzteils (12) des Endlosbandes (10) kontinuierlich variieren kann und die Menge von Gegenständen, die auf das Nutzteil (12) des Bandes (10) aufgelegt werden können, infolgedessen variieren kann,
**dadurch gekennzeichnet, daß** sie ferner umfaßt
wenigstens ein zweites Leitrad (20'), das in der Arbeitsebene (P1) linear beweglich ist,
wenigstens ein festes Umleitorgan (70) in der Arbeitsebene (P1), um das Endlosband (10) von dem ersten beweglichen Leitrad (20) zu dem zweiten beweglichen Leitrad (20') in der Arbeitsebene zu lenken,
wenigstens ein zweites Leitrad (22'), das in der Reserveebene (P2) linear beweglich ist,
wenigstens ein festes Umleitorgan (72) in der Reserveebene (P2), um das Endlosband (10) von dem ersten beweglichen Leitrad (22) zu dem zweiten beweglichen Leitrad (22') in der Reserveebene zu lenken, sowie
wenigstens ein zweites Bewegungsmittel für die zweiten Leiträder (20', 22'), das dazu bestimmt ist, die zweiten Leiträder (20', 22') derart synchron zu bewegen, daß die Summe der Abstände zwischen jedem Leitrad und den Umlenkorganen konstant ist.

2. Bewegungsvorrichtung nach Anspruch 1, **dadurch gekennzeichnet, daß** die Arbeitsebene (P1) und die Reserveebene (P2) parallel verlaufen.

3. Bewegungsvorrichtung nach Anspruch 1 oder 2, **dadurch gekennzeichnet, daß** die beiden Umlenkorgane über einen Motor (19) angetriebene Rollen (16, 18) sind, die das Mittel zum Antreiben des Endlosbandes (10) bilden.

4. Bewegungsvorrichtung nach Anspruch 1 oder 2, **dadurch gekennzeichnet, daß** die linear beweglichen Leiträder (20, 22) über einen Motor drehangetrieben werden und das Mittel zum Antreiben des Endlosbandes bilden.

5. Bewegungsvorrichtung nach einem der Ansprüche 1 bis 4, **dadurch gekennzeichnet, daß** jedes Bewegungsmittel ein Führungsriemen (24, 24') ist, an dem ein Paar von Leiträdern (20, 22; 20', 22') befestigt ist, so daß wenn sich der Riemen (24, 24') bewegt, er die beiden Leiträder (20, 22; 20', 22') antreibt, wodurch die Länge (L) des Nutzabschnittes (12) des Endlosbandes (10) verändert wird.

6. Bewegungsvorrichtung nach einem der Ansprüche 1 bis 5, **dadurch gekennzeichnet, daß** zwei zugeordnete Leiträder (20, 22; 20', 22') sich in ein und derselben Führungsebene (P3, P3') linear bewegen.

7. Bewegungsvorrichtung nach einem der Ansprüche 1 bis 6, **dadurch gekennzeichnet, daß** zwei zugeordnete Leiträder (20, 22; 20', 22') sich in parallelen Richtungen und in entgegengesetzten Richtungen linear bewegen.

8. Bewegungsvorrichtung nach Anspruch 6 oder 7, **dadurch gekennzeichnet, daß** jede Führungsebene (P3, P3'), in der sich ein Paar von Leiträdern (20, 22; 20', 22') bewegt, zu der Arbeitsebene (P1) senkrecht verläuft.

9. Bewegungsvorrichtung nach einem der Ansprüche 1 bis 8, **dadurch gekennzeichnet, daß** sie für die vorübergehende Lagerung von Produkten zwischen einer ersten Arbeitsstation und einer zweiten Arbeitsstation verwendet wird.
